# DEMANDE DE BREVET EUROPEEN

(11) **EP 2 048 043 A1**
(43) Date de publication de la demande: **15.04.2009**
(21) Numéro de dépôt: 08166343.7
(22) Date de dépôt: 10.10.2008
(51) Int. Cl.: B60R 21/34, B60R 19/48, B60R 21/0134

(54) **Dispositif d'absorption de chocs pour véhicule automobile et méthode de pilotage d'un tel dispositif**

(30) Priorité: 11.10.2007 FR 0758213
(71) Demandeur: Faurecia Bloc Avant, 92000 Nanterre (FR)
(72) Inventeur: Laurent, Claude, 25420 Voujeaucourt (FR); Borde, Patrick, 25400 Audincourt (FR)
(74) Mandataire: Blot, Philippe Robert Emile

(57) **Abrégé**

Le dispositif (10) d'absorption de chocs pour véhicule automobile comprend des moyens (14) d'absorption adaptés pour l'absorption de chocs réparabilité.
Les moyens (14) d'absorption de chocs réparabilité comprennent des première et seconde unités (24, 26), les moyens (14) étant susceptibles d'adopter une position déployée dans laquelle les unités (24, 26) sont relativement plus décalées longitudinalement l'une par rapport à l'autre et une position escamotée dans laquelle les unités (24, 26) sont engagées longitudinalement au moins partiellement l'une dans l'autre, le dispositif (10) comprenant en outre :
- des moyens (36) pour bloquer normalement les moyens (14) d'absorption de chocs réparabilité en position déployée,
- des moyens (38) pour détecter un obstacle susceptible de percuter le véhicule automobile et des moyens (40) pour évaluer des caractéristiques du choc qui résulterait de l'impact de l'obstacle sur le véhicule,
- des moyens (42) pour libérer les moyens (14) d'absorption de chocs réparabilité de la position déployée si les caractéristiques du choc vérifient des critères prédéterminés.

## Description

La présente invention concerne en général les dispositifs d'absorption de chocs pour véhicule automobile, notamment pour les faces avant de ces véhicules.

Plus précisément, l'invention concerne selon un premier aspect un dispositif d'absorption de chocs pour véhicule automobile, du type comprenant des moyens d'absorption adaptés pour l'absorption de chocs réparabilité.

Il est connu d'équiper les faces avant de véhicule automobile, outre les moyens d'absorption de chocs réparabilité, d'absorbeurs de chocs piéton. Les absorbeurs de chocs piéton et les absorbeurs de chocs réparabilité sont disposés longitudinalement l'un derrière l'autre, de telle sorte que l'encombrement longitudinal dédié à la fonction absorption d'énergie à bord du véhicule est important. Ceci contribue à augmenter le porte-à-faux avant du véhicule.

Dans ce contexte, l'invention vise à proposer un dispositif d'absorption de chocs dont l'encombrement longitudinal est réduit.

A cette fin, l'invention porte sur un dispositif d'absorption de chocs du type précité, caractérisé en ce que les moyens d'absorption de chocs réparabilité comprennent des première et seconde unités dont l'une est susceptible d'être liée à un élément de structure du véhicule, les moyens d'absorption de chocs réparabilité étant susceptibles d'adopter une position déployée dans laquelle les première et seconde unités sont relativement plus décalées longitudinalement l'une par rapport à l'autre et une position escamotée dans laquelle les première et seconde unités sont relativement moins décalées longitudinalement l'une par rapport à l'autre et sont engagées longitudinalement au moins partiellement l'une dans l'autre, le dispositif comprenant en outre :
- des moyens pour bloquer normalement les moyens d'absorption de chocs réparabilité en position déployée,
- des moyens pour détecter un obstacle susceptible de percuter le véhicule automobile et des moyens pour évaluer les caractéristiques du choc qui résulteraient de l'impact de l'obstacle sur le véhicule,
- des moyens pour libérer les moyens d'absorption de chocs réparabilité de la position déployée si les caractéristiques du choc vérifient des critères prédéterminés.

Le dispositif d'absorption de chocs peut également présenter une ou plusieurs des caractéristiques ci-dessous, considérées individuellement ou selon toutes les combinaisons techniquement possibles :
- le dispositif comprend des moyens d'absorption adaptés pour l'absorption de chocs piéton, les moyens d'absorption de chocs piéton s'étendant transversalement et comportant un logement, la seconde unité des moyens d'absorption de chocs réparabilité étant susceptible d'être fixée audit élément de structure du véhicule en étant interposée longitudinalement entre les moyens d'absorption de chocs piéton et ledit élément de structure, la première unité étant relativement plus engagée dans le logement en position déployée des moyens d'absorption de chocs réparabilité et étant relativement moins engagée dans le logement en position escamotée des moyens d'absorption de chocs réparabilité ;
- les moyens d'absorption de chocs réparabilité présentent une première longueur longitudinale en position déployée, et une seconde longueur longitudinale inférieure à la première en position escamotée ;
- les moyens pour détecter un obstacle sont un radar, un capteur ou une caméra vidéo ;
- les moyens pour libérer les moyens d'absorption de chocs réparabilité de la position déployée sont des moyens magnétiques ou pyrotechniques ;
- les moyens pour libérer les moyens d'absorption de chocs réparabilité de la position déployée sont aptes à décaler les première et seconde unités l'une par rapport à l'autre dans un plan perpendiculaire à la direction longitudinale ;
- les moyens pour bloquer les moyens d'absorption de chocs réparabilité en position déployée comprennent au moins une pièce intermédiaire bloquant mécaniquement en position les première et seconde unités l'une par rapport à l'autre, les moyens pour libérer les moyens d'absorption de chocs réparabilité de la position déployée étant apte à casser ou escamoter la ou chaque pièce intermédiaire ;
- une fois les moyens d'absorption de chocs réparabilité libérés de leur position déployée, les première et seconde unités sont libres de s'engager l'une dans l'autre sous l'effet de l'impact de l'obstacle sur le véhicule ;
- le dispositif comprend un actionneur apte, une fois les moyens d'absorption de chocs réparabilité libérés de leur position déployée, à engager les première et seconde unités l'une dans l'autre ; et
- les moyens pour évaluer des caractéristiques du choc qui résulterait de l'impact de l'obstacle sur le véhicule évaluent au moins un paramètre caractéristique de la nature de l'obstacle et un paramètre représentatif de la vitesse du véhicule au moment de l'impact.

Selon un second aspect, l'invention concerne une méthode de pilotage d'un dispositif d'absorption de chocs présentant les caractéristiques ci-dessus, caractérisée en ce qu'elle comprend les étapes suivantes :
- maintenir les moyens d'absorption de chocs réparabilité bloqués en position déployée,
- détecter les obstacles susceptibles de percuter le véhicule automobile
- évaluer les caractéristiques du choc qui résulterait de l'impact de chaque obstacle sur le véhicule,
- libérer les moyens d'absorption de chocs réparabilité de la position déployée si les caractéristiques du choc vérifient des critères prédéterminés.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée, en vue de dessus, d'un dispositif d'absorption de chocs conforme à l'invention, les moyens d'absorption de chocs réparabilité étant en position déployée ; et

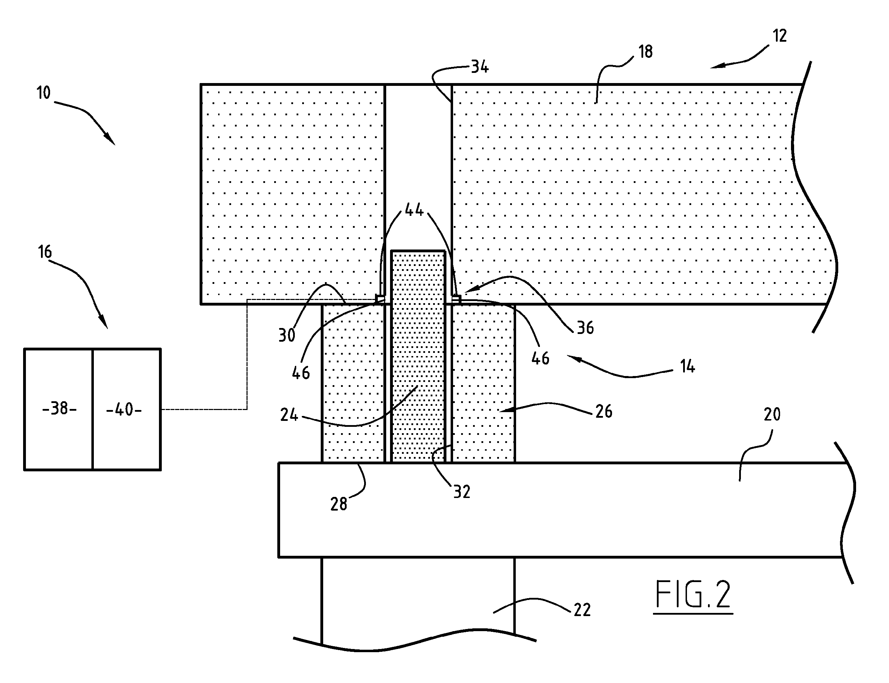

- la figure 2 est une vue similaire à celle de la figure 1, les moyens d'absorption de chocs réparabilité étant représentés en position escamotée.

Dans la description qui va suivre, l'avant, l'arrière, les directions longitudinale et transversale, s'entendent relativement au sens de déplacement normal du véhicule.

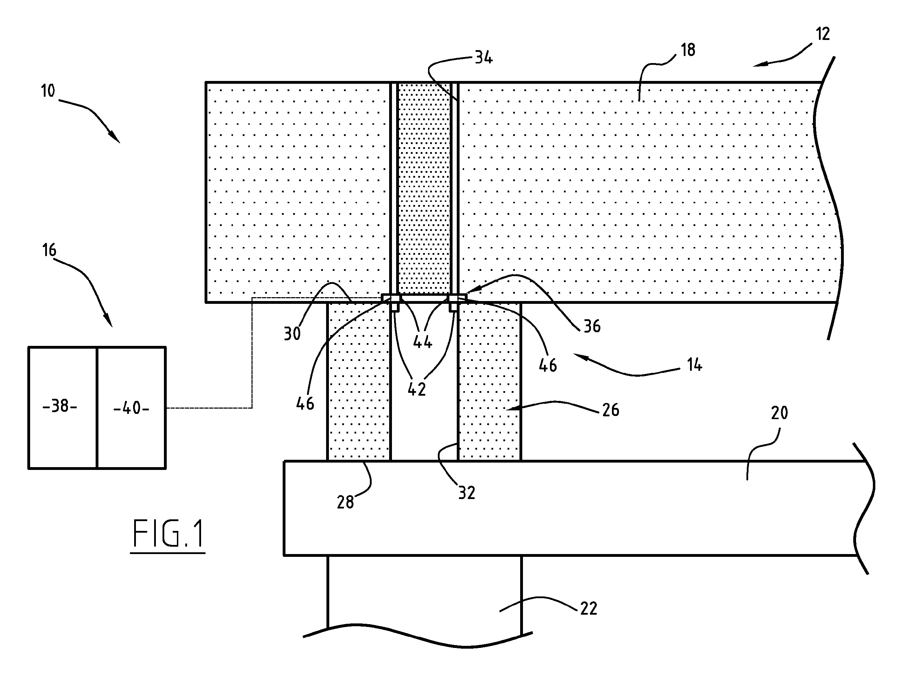

Comme le montre la figure 1, le dispositif d'absorption de chocs 10 est prévu pour être installé dans la face avant du véhicule automobile. Ce dispositif comprend :
- des moyens d'absorption 12 adaptés pour l'absorption de chocs piéton,
- des moyens d'absorption 14 adaptés pour l'absorption de chocs réparabilité, susceptibles d'adopter des positions déployée et escamotée,
- des moyens 16 de pilotage des moyens 14 d'absorption de chocs réparabilité, en anticipation d'impacts sur la face avant du véhicule automobile.

Les moyens 12 sont prévus pour l'absorption du choc réglementaire concernant le piéton. Le choc piéton correspond au choc d'une jambe d'environ 13 kg heurtant le véhicule à 40 km/h.

Les moyens 12 comprennent un absorbeur transversal 18 s'étendant sur la plus grande partie de la largeur transversale du véhicule. L'absorbeur 18 est un bloc de mousse de matière plastique, ou est par exemple une coque mince en matière plastique pourvue de nervures de rigidification. L'absorbeur 18 est typiquement recouvert par la peau de pare-chocs, non représentée sur la figure 1.

Les moyens 14 sont prévus pour absorber un choc normalisé connu sous le nom "choc réparabilité". Le choc réparabilité correspond au choc du véhicule sur un mur à environ 15km/h.

Des moyens 14 d'absorption de chocs réparabilité sont disposés de chacun des deux côtés latéraux du véhicule, et sont interposés entre l'absorbeur 18 et la poutre de pare-chocs 20. Comme le montre la figure 1, la poutre de pare-chocs 20 s'étend elle aussi sur la plus grande partie de la largeur transversale du véhicule, et est rigidement fixée aux extrémités avant des deux longerons principaux 22 du véhicule.

Les moyens 14 d'absorption de chocs réparabilité comprennent des première et seconde unités 24 et 26 susceptibles de s'engager longitudinalement au moins partiellement l'une dans l'autre, selon que les moyens 14 adoptent leur position déployée ou leur position escamotée.

Les première et seconde unités 24, 26 sont des blocs prévus pour s'écraser en absorbant l'énergie du choc en cas de choc réparabilité. Les blocs se déforment pastiquement sous l'effet du choc, la déformation permettant d'absorber l'énergie du choc.

Les première et seconde unités 24 et 26 sont chacune typiquement un bloc de mousse métallique, par exemple un bloc de mousse d'aluminium ou d'alliage d'aluminium.

Alternativement les blocs peuvent être en aluminium ou en alliage d'aluminium, et être conformés de manière à comporter des alvéoles en nid d'abeilles.

Les blocs peuvent également être chacun constitué d'un profilé, avec ou sans cloisons intérieures. Le profilé peut avoir une section simple (circulaire, carrée, ovale ect...) ou complexe (en trèfle, divisée longitudinalement par une ou des cloisons internes). Les blocs peuvent également chacun être constitué de plusieurs profilés accolés les uns aux autre. Les blocs dans ce cas peuvent être constitués de métal, par exemple d'aluminium ou d'alliage d'aluminium, ou d'un matériau composite formé d'une matrice polymère avec une charge en fibres (fibre de carbone de verre...).

Chaque bloc peut comprendre plusieurs parties différentes, par exemple une partie en mousse métallique et une partie formée d'un profilé.

Les deux éléments 24 et 26 peuvent être différents l'un de l'autre ou identique l'un à l'autre.

La seconde unité 26 est interposée entre l'absorbeur 18 et la poutre de pare-chocs 20. L'unité 26 est placée dans le prolongement du longeron 22. Elle est plaquée par une face arrière 28 sensiblement perpendiculaire à la direction longitudinale contre la poutre de pare-chocs 20. Elle est plaquée par une face avant 30 opposée à la face 28, et perpendiculaire à la direction longitudinale, contre l'absorbeur 18. L'unité 26 est percée par un trou central longitudinal 32 s'étendant sur toute sa longueur longitudinale de l'unité 26. Le trou 32 présente perpendiculairement à la direction longitudinale une section constante.

La première unité 24 est pleine. Elle présente perpendiculairement à la direction longitudinale une section constante, conjuguée de celle du trou 32. Elle présente longitudinalement une longueur un peu supérieure à celle de l'unité 26.

En position déployée des moyens d'absorption 14, la première unité 24 est disposée dans un logement longitudinal 34 ménagée dans l'absorbeur 18. Le logement 34 présente la même section droite, perpendiculairement à la direction longitudinale, que le trou 32. Le logement 34 est placé dans le prolongement longitudinal du trou 32 et débouche vers l'arrière dans celui-ci. Comme le montre la figure 1, en position déployée des moyens d'absorption 14, la première unité 24 est située entièrement à l'intérieur du logement 34, et est complètement extraite du trou 32.

En position escamotée des moyens d'absorption 14, la première unité 24 est engagée dans la seconde unité 26, à l'intérieur du trou 32. Plus précisément, la première unité 24 s'étend sur toute la longueur du trou 32. Elle n'est plus engagée dans le logement 34 que sur une petite fraction de sa longueur, par exemple 20 %.

Les moyens 16 pour piloter les moyens d'absorption de chocs réparabilité 14 comprennent :
- des moyens 36 pour bloquer normalement les moyens d'absorption 14 en position déployée,
- des moyens 38 pour détecter un obstacle susceptible de percuter le véhicule automobile et des moyens 40 pour évaluer des caractéristiques du choc qui résulteraient de l'impact de l'obstacle sur le véhicule,
- des moyens 42 pour libérer les moyens d'absorption de chocs réparabilité 14 de la position déployée si les caractéristiques du choc vérifient des critères prédéterminés.

Les moyens de détection 38 comprennent typiquement un radar ou une caméra vidéo, couplé à un calculateur.

Les moyens d'évaluation 40 des caractéristiques du choc comprennent typiquement un calculateur, qui peut être commun avec celui des moyens 38. Ce calculateur, en coopération avec les moyens de détection 38, est apte à évaluer un paramètre caractéristique de la nature de l'obstacle, typiquement si l'obstacle est un objet animé, tel qu'un piéton, ou un objet inanimé, par exemple un mur ou un véhicule automobile. Les moyens 40 sont également aptes à évaluer un paramètre représentatif de la vitesse relative du véhicule par rapport à l'obstacle au moment de l'impact avec l'obstacle.

Les moyens d'absorption 14 sont normalement en position déployée, comme représenté sur la figure 1. Les moyens 36 pour bloquer les moyens d'absorption 14 en position déployée comprennent par exemple une pluralité de doigts 44 en saillie à l'intérieur du logement 34. Les doigts 44 sont répartis sur la périphérie du logement 34. Ils sont disposés à une extrémité longitudinale arrière du logement 34, tournée vers la seconde unité 26. Les doigts 44 bloquent ainsi la première unité 24 en translation longitudinalement à partir du logement 34 vers le trou 32.

Les moyens 42 pour libérer les moyens d'absorption de chocs réparabilité 14 de la position déployée comprennent par exemple des moyens pyrotechniques 42, commandés par le calculateur des moyens 40. Les moyens 42 sont typiquement des charges explosives, placées de manière à sectionner les doigts 44 quand elles sont déclenchées. A cette fin, les doigts 44 peuvent comporter des lignes de moindre résistance 46 le long desquelles sera effectuée la rupture provoquée par l'explosion des charges 42.

Quand les doigts 44 sont sectionnés le long des lignes de rupture 46, la première unité 24 n'est plus bloquée en translation longitudinalement vers le trou 32 de la seconde unité.

Le fonctionnement du dispositif d'absorption décrit ci-dessus va maintenant être détaillé.

Comme indiqué ci-dessus, les moyens d'absorption de chocs réparabilité 14 sont normalement en position déployée, la première unité 24 étant engagée dans le logement 34 de l'absorbeur 18, et étant bloquée dans ce logement par les doigts 44.

Quand les moyens de détection 38 détectent un obstacle susceptible de percuter l'avant du véhicule, ils le signalent aux moyens d'évaluation 40. Les moyens d'évaluation 40 évaluent alors en fonction du signal transmis par les moyens de détection 38 un paramètre indiquant si l'obstacle est animé, c'est-à-dire s'il s'agit d'un piéton, ou, au contraire, si l'obstacle est un objet inanimé, à savoir un mur ou un autre véhicule automobile.

Les moyens 40 évaluent ensuite un paramètre représentatif de la vitesse relative du véhicule par rapport à l'obstacle au moment de l'impact, en fonction notamment de la vitesse instantanée du véhicule, et de la distance actuelle entre l'obstacle détecté et le véhicule. Cette distance est par exemple évaluée par les moyens de détection 38. La vitesse instantanée actuelle du véhicule est récupérée dans un calculateur de bord du véhicule.

Si l'obstacle est un objet inanimé, les moyens 40 ne commandent pas la libération des moyens d'absorption de chocs réparabilité. Ceux-ci restent donc en position déployée. Dans cette situation, les moyens d'absorption 14 présentent une longueur longitudinale importante, et donc une capacité d'absorption également importante.

Si l'obstacle est un piéton, et si la vitesse du véhicule au moment de l'impact est estimée inférieure à une limite prédéterminée, par exemple 15 km/h, alors les moyens 40 commandent de ne pas libérer les moyens d'absorption 14 de leur position déployée. En effet, du fait que le choc se produira à une vitesse peu élevée, la probabilité que le piéton soit blessé par l'unité 24 est faible. Cette unité constitue un point dur au sein de l'absorbeur 18, mais l'impact du piéton sur l'absorbeur 18 se fait avec une énergie suffisamment basse pour que ce point dur ne puisse pas blesser le piéton.

En revanche, si l'obstacle est un piéton, et si la vitesse du véhicule est estimée supérieure à la limite prédéterminée au moment du choc, par exemple supérieure à 15 km/h, alors les moyens 40 commandent aux moyens 42 de libérer les moyens d'absorption 14 de la position déployée. Les charges 42 sont alors déclenchées, de telle sorte que les doigts 44 sont sectionnés le long des lignes de moindre résistance 46. La première unité 24 des moyens 14 est alors libre de s'engager dans le trou 32 de la seconde unité 26.

Si l'obstacle percute le véhicule, les moyens d'absorption de chocs piéton jouent leur rôle d'amortissement. Sous l'effet de l'impact de l'obstacle sur l'avant du véhicule, la première unité 24 est propulsée à l'intérieur du trou 32, les moyens 14 adoptant ainsi leur position escamotée. L'unité 24 ne constitue donc plus un point dur au sein de l'absorbeur 18.

Le dispositif d'absorption de chocs décrit ci-dessus présente de multiples avantages.

Du fait qu'il comporte des moyens pour détecter un obstacle susceptible de percuter le véhicule et pour évaluer les caractéristiques du choc qui en résulteraient, des moyens d'absorption de chocs réparabilité susceptibles d'adopter une position déployée ou une position escamotée, et des moyens pour libérer les moyens d'absorption de chocs réparabilité de la position déployée si les caractéristiques du choc vérifient des critères prédéterminés, le dispositif comporte des moyens d'absorption de chocs réparabilité qui ont une grande capacité d'absorption quand nécessaire, et qui peuvent aussi être raccourcis longitudinalement de manière à laisser de la place pour le fonctionnement d'autres organes de la face avant, et notamment pour le fonctionnement des moyens d'absorption de chocs piéton.

Du fait que la première unité des moyens d'absorption est logée dans les moyens d'absorption de chocs piéton en position déployée des moyens d'absorption de chocs réparabilité, on dispose de moyens d'absorption de chocs réparabilité de longueur et de capacité maximales quand nécessaire, et de moyens d'absorption de chocs piéton qui ne comportent pas de point dur en cas de chocs piéton.

Le dispositif d'absorption remplit ainsi parfaitement les deux fonctions d'absorbeur piéton et d'absorbeur réparabilité, dans un encombrement longitudinal correspondant sensiblement à l'encombrement d'un absorbeur de chocs réparabilité de l'état de la technique.

Il devient alors possible de raccourcir le porte-à-faux avant de la voiture.

Le dispositif d'absorption peut présenter de multiples variantes.

Ainsi, les moyens de blocage des moyens d'absorption de chocs réparabilité en position déployée peuvent ne pas être les doigts décrits plus haut. Ces moyens peuvent comprendre une plaque obturant complètement l'extrémité du logement 34 tournée vers l'unité 26. Dans ce cas, les moyens de libération sont constitués par exemple par des charges réparties le long d'une ligne de moindre résistance à contour fermé ménagée dans la plaque. Quand les charges sont déclenchées, il se crée alors une ouverture dans la plaque, de section suffisante pour laisser passer l'unité 24.

En variante, l'unité 24 peut être, dans la position déployée des moyens d'absorption de chocs réparabilité 14, légèrement décalée par rapport au trou 32 dans une plan perpendiculaire à la direction longitudinale. Ainsi, l'unité 24 n'est pas susceptible normalement de pénétrer à l'intérieur du trou 32, une zone périphérique de l'unité 24 venant buter contre le bord du trou 32. Dans ce cas, les moyens pour libérer les moyens d'absorption de chocs réparabilité de la position déployée peuvent comprendre par exemple des moyens pyrotechniques ou magnétiques, aptes à déplacer l'unité 24 dans un plan perpendiculaire à la direction longitudinale par rapport à l'unité 26. Ces moyens sont aptes à amener l'unité 24 dans le prolongement du trou 32, de telle sorte que l'unité 24 est susceptible de s'engager longitudinalement dans le trou 32.

Selon une autre variante de réalisation, la ou les pièces empêchant l'unité 24 de s'engager dans le trou 32, par exemple les doigts 36, peuvent être escamotées, et non sectionnées, en vue de libérer les moyens 14 de leur position déployée. Les doigts 36 peuvent par exemple être escamotés magnétiquement, selon un mouvement de translation ou de rotation. Ils peuvent également être escamotés à l'aide de moyens pyrotechniques.

En variante, les positions des unités 24 et 26 peuvent être inversées. Dans ce cas, l'unité pleine 24 est interposée entre la poutre 20 et l'absorbeur 18. L'unité 26, comportant le trou 32, est disposée dans un logement annulaire de l'absorbeur 18. Dans la position escamotée des moyens d'absorption 14, l'unité 26 est placée autour de l'unité 24, entre l'absorbeur 18 et la poutre 20.

L'unité 24 n'est pas nécessairement entièrement engagée dans le logement 34 en position déployée des moyens 14. Elle peut n'être que partiellement engagée dans le logement 34.

De même, l'unité 24 peut être partiellement ou totalement engagée dans le trou 32 en position escamotée des moyens 14.

L'unité 24 peut présenter une longueur longitudinale égale, inférieure ou supérieure à celle de l'unité 26. De même, l'unité 24 peut présenter une longueur longitudinale égale, inférieure ou supérieure à l'épaisseur longitudinale de l'absorbeur 18. Par exemple, l'unité 24 peut être longitudinalement plus courte que l'absorbeur 18. Dans ce cas, quand l'unité 24 est insérée dans le logement 34, il subsiste une épaisseur de mousse longitudinalement dans le prolongement de l'unité 24.

Les moyens d'absorption de chocs réparabilité 14 décrits ci-dessus peuvent être employés de multiples manières. L'unité 24 n'est pas nécessairement logée dans un logement ménagé dans un absorbeur de chocs piéton. Ainsi, l'absorbeur de chocs piéton 12 pourrait être disposé à l'avant de l'unité 24, ce qui pénalise bien entendu le porte-à-faux du véhicule. Les moyens 24 pourraient être interposés entre l'extrémité du longeron 22 et la poutre de pare-chocs 20, les moyens d'absorption de chocs piéton étant quant à eux disposés à l'avant de la poutre de pare-chocs 20.

La logique conduisant à libérer ou non les moyens d'absorption de chocs réparabilité 14 de leur position déployée pourrait être différente de celle décrite ci-dessus. Ainsi, les moyens 14 pourraient être libérés seulement en fonction de la nature de l'obstacle, indépendamment de la vitesse du véhicule au moment de l'impact. Par ailleurs, le paramètre caractéristique de la nature de l'obstacle pourrait ne pas être objet animé ou inanimé, mais être par exemple le volume apparent de l'obstacle.

Le dispositif peut comprendre un actionneur apte, une fois les moyens d'absorption de chocs réparabilité libérés de leur position déployée, à déplacer les unités 24 et 26 l'une par rapport à l'autre et à les engager l'une dans l'autre.

Le dispositif d'absorption de chocs peut être placé à l'arrière du véhicule et non à l'avant, ou même sur les côtés.

## Revendications

1. Dispositif d'absorption de chocs pour véhicule automobile, ce dispositif (10) comprenant des moyens (14) d'absorption adaptés pour l'absorption de chocs réparabilité, **caractérisé en ce que** les moyens (14) d'absorption de chocs réparabilité comprennent des première et seconde unités (24, 26) dont l'une est susceptible d'être liée à un élément (20) de structure du véhicule, les moyens (14) d'absorption de chocs réparabilité étant susceptibles d'adopter une position déployée dans laquelle les première et seconde unités (24, 26) sont relativement plus décalées longitudinalement l'une par rapport à l'autre et une position escamotée dans laquelle les première et seconde unités (24, 26) sont relativement moins décalées longitudinalement l'une par rapport à l'autre et sont engagées longitudinalement au moins partiellement l'une dans l'autre, les première et seconde unités (24, 26) étant prévues chacune pour s'écraser en absorbant une partie de l'énergie du choc, le dispositif (10) comprenant en outre :
- des moyens (36) pour bloquer normalement les moyens (14) d'absorption de chocs réparabilité en position déployée,
- des moyens (38) pour détecter un obstacle susceptible de percuter le véhicule automobile et des moyens (40) pour évaluer des caractéristiques du choc qui résulterait de l'impact de l'obstacle sur le véhicule,
- des moyens (42) pour libérer les moyens (14) d'absorption de chocs réparabilité de la position déployée si les caractéristiques du choc vérifient des critères prédéterminés.

2. Dispositif d'absorption de chocs selon la revendication 1, **caractérisé en ce qu'**il comprend des moyens (12) d'absorption adaptés pour l'absorption de chocs piéton, les moyens (12) d'absorption de chocs piéton s'étendant transversalement et comportant un logement (34), la seconde unité (26) des moyens (14) d'absorption de chocs réparabilité étant susceptible d'être fixée audit élément de structure (20) du véhicule en étant interposée longitudinalement entre les moyens (12) d'absorption de chocs piéton et ledit élément de structure (20), la première unité (24) étant relativement plus engagée dans le logement (34) en position déployée des moyens (14) d'absorption de chocs réparabilité et étant relativement moins engagée dans le logement (34) en position escamotée des moyens (14) d'absorption de chocs réparabilité.

3. Dispositif d'absorption de chocs selon la revendication 1 ou 2, **caractérisé en ce que** les moyens (14) d'absorption de chocs réparabilité présentent une première longueur longitudinale en position déployée, et une seconde longueur longitudinale inférieure à la première en position escamotée.

4. Dispositif d'absorption de chocs selon l'une quelconque des revendications 1 à 3, **caractérisé en ce que** les moyens (38) pour détecter un obstacle sont un radar, un capteur ou une caméra vidéo.

5. Dispositif d'absorption de chocs selon l'une quelconque des revendications 1 à 4, **caractérisé en ce que** les moyens (42) pour libérer les moyens (14) d'absorption de chocs réparabilité de la position déployée sont des moyens magnétiques ou pyrotechniques.

6. Dispositif d'absorption de chocs selon l'une quelconque des revendications 1 à 5, **caractérisé en ce que** les moyens (42) pour libérer les moyens (14) d'absorption de chocs réparabilité de la position déployée sont aptes à décaler les première et seconde unités (24, 26) l'une par rapport à l'autre dans un plan perpendiculaire à la direction longitudinale.

7. Dispositif d'absorption de chocs selon l'une quelconque des revendications 1 à 5, **caractérisé en ce que** les moyens (36) pour bloquer les moyens (14) d'absorption de chocs réparabilité en position déployée comprennent au moins une pièce intermédiaire bloquant mécaniquement en position les première et seconde unités (24, 26) l'une par rapport à l'autre, les moyens (42) pour libérer les moyens (14) d'absorption de chocs réparabilité de la position déployée étant apte à casser ou escamoter la ou chaque pièce intermédiaire.

8. Dispositif d'absorption de chocs selon l'une quelconque des revendications 1 à 7, **caractérisé en ce que,** une fois les moyens (14) d'absorption de chocs réparabilité libérés de leur position déployée, les première et seconde unités (24, 26) sont libres de s'engager l'une dans l'autre sous l'effet de l'impact de l'obstacle sur le véhicule.

9. Dispositif d'absorption de chocs selon l'une quelconque des revendications 1 à 7, **caractérisé en ce qu'**il comprend un actionneur apte, une fois les moyens (14) d'absorption de chocs réparabilité libérés de leur position déployée, à engager les première et seconde unités (24, 26) l'une dans l'autre.

10. Dispositif d'absorption de chocs selon l'une quelconque des revendications 1 à 9, **caractérisé en ce que** les moyens (40) pour évaluer des caractéristiques du choc qui résulterait de l'impact de l'obstacle sur le véhicule évaluent au moins un paramètre caractéristique de la nature de l'obstacle et un paramètre représentatif de la vitesse du véhicule au moment de l'impact.

11. Méthode de pilotage d'un dispositif d'absorption de chocs selon l'une quelconque des revendications 1 à 10, **caractérisée en ce qu'**elle comprend les étapes suivantes :
- maintenir les moyens (14) d'absorption de chocs réparabilité bloqués en position déployée,
- détecter les obstacles susceptibles de percuter le véhicule automobile
- évaluer les caractéristiques du choc qui résulterait de l'impact de chaque obstacle sur le véhicule,
- libérer les moyens (14) d'absorption de chocs réparabilité de la position déployée si les caractéristiques du choc vérifient des critères prédéterminés.
